# EUROPEAN PATENT SPECIFICATION

(11) **EP 2 583 016 B1**
(45) Date of publication and mention of the grant of the patent: **01.04.2015**
(21) Application number: 11727750.9
(22) Date of filing: 17.06.2011
(51) Int. Cl.: F16L 59/14, F16L 59/065

(54) **AN INSULATED FLUID DUCT**
ISOLIERTER FLÜSSIGKEITSKANAL
CONDUIT DE FLUIDE ISOLÉ

(30) Priority: 18.06.2010 GB 201010303
(43) Date of publication of application: 24.04.2013
(73) Proprietor: Spirax-Sarco Limited, Cheltenham, Gloucestershire GL53 8ER (GB)
(72) Inventor: MILLER, Jeremy, Gloucestershire GL51 9NQ (GB); VIVIAN, Tom, Gloucestershire GL51 9NQ (GB); ROSAGRO, Joe, Gloucestershire GL51 9NQ (GB)
(74) Representative: McCartney, Jonathan William
(86) International application number: PCT/GB2011/051140
(87) International publication number: WO 2011/158043

(56) References cited:
- WO-A2-02/061327
- DE-C1- 4 016 048

## Description

### Field of the Invention

This invention relates to an insulated fluid duct for conveying fluids at temperatures above or below the ambient temperature. The present invention is concerned particularly, although not exclusively, with ducts for conveying hot fluids, such as steam.

### Background of the Invention

Many industrial companies maintain on site steam plants for generating steam and then distributing the steam to one or more locations at the site where the energy contained in the steam is extracted for use in various thermal processes.

To optimise the efficiency of the steam distribution systems used to convey steam around a site, steps are normally taken to reduce heat loss from the hot parts of the system. To this end, typically, insulating material is placed around the outer surfaces of the hot parts, including the steam ducts or pipes that carry the steam. As is known, the insulation material usually comprises mineral wool, fibreglass or calcium silicate and the like.

In certain of the industries that use steam plants, for example the pharmaceutical industry and the food and beverage industry, hygiene is of critical importance.

In the pharmaceutical industry, steam is widely used in processes for producing pharmaceutical products and certain standards of cleanliness and purity, as usually mandated by regulations, must be adhered to.

Consequently, in "cleanroom" environments requiring pure and clean steam installations it is not acceptable to use conventional insulation materials because such materials risk contaminating the clean environment. In the context of the present invention, a "cleanroom" is an environment, typically used in manufacturing or scientific research, in which special measures are taken to ensure a low level of environmental pollutants such as dust, airborne microbes, aerosol particles and chemical vapors. Thus, a cleanroom has a controlled level of contamination that is specified by the number of particles per cubic meter at a specified particle size. Cleanroom standards are specified by ISO 14644-1 and, for example, ISO classes 1 to 4 specify no particles larger than 0.5µm. For the purposes of the present invention, a cleanroom may be regarded as an environment in accordance with ISO classes 1 to 4, and preferably classes 1 and 2.

To date, it is common practice in such clean environments to leave the steam pipes, which are typically made from stainless steel, un-insulated. This lack of insulation can typically give rise to a heat loss of approximately 330 Watts per metre of pipe which, as clean environments are normally air conditioned, is usually balanced by an equal extra amount of air conditioning capacity.

This heat loss and the additional air conditioning usage it necessitates are uneconomical.

It is known, for example from DE3338465, GB2358055 and EP0104790, to insulate ducts for hot fluids by means of a vacuum. In such known proposals, the duct is a twin-walled duct comprising inner and outer pipes, a vacuum being maintained in the space between the walls. The known ducts are used, for example, to convey steam underground in the oil industry to assist in the extraction of oil, or for conveying oil undersea from offshore locations.

A fully insulated duct, such as is achieved by means of a vacuum between the inner and outer pipes of a twin-walled duct, can give rise to difficulties arising from differential expansion between the pipes. The outer pipe is substantially isolated from the temperature of any hot or cold fluid flowing in the inner pipe, and so remains at or close to ambient temperature. It therefore experiences little thermal expansion and contraction. The inner pipe, however, can vary in temperature over a considerable range, for example from ambient to the temperature of the flowing fluid, which may be 150°C or more. This gives rise to substantial thermal expansion and contraction which must be accommodated while maintaining a sealed connection between the inner and outer pipes at their ends. Since an individual duct section can have a length of, for example, 4 metres, it will be appreciated that the differential expansion or contraction between the inner and outer pipes can be substantial.

It is desirable for the inner pipe to be supported within the outer pipe at one or more positions along the length of the duct section. Support means for this purpose must be able to accommodate differential expansion between the inner and outer pipes, and must also minimise any heat transfer between the pipes.

DE4016048 discloses a process for joining variously shaped vacuum heat insulating elements having edges adapted to be butted against each other or to overlap each other. A bellows is tightly connected with each vacuum heat insulating element in the area of its edges, the free edge of the bellows projecting beyond the element. The heat insulating elements are positioned such that the edges of the bellows rest against one another in an aligned manner or overlap, and the bellows are tightly connected with one another. The heat insulating elements are then moved against one another until their edges rest against one another or overlap, and are tightly connected with one another. The gap at the joint formed between the heat insulating elements and the bellows is evacuated and closed off tightly.

WO 02/061327 discloses a cryogenic fluid piping system provided with two or more coupled pipe spools, each spool having an inner and outer pipe, the inner for carrying cryogenic fluid. The pipe spools are configured with a bayonet connection to allow expansion and contraction of the system without failure. A leak control device and pressure relief device are included to protect the system from catastrophic failure in the event of a cryogenic fluid leak from the inner pipe.

### Summary of the Invention

According to a first aspect of the present invention, there is provided a duct section comprising an inner pipe for conveying a fluid, wherein the inner pipe includes a bellows, an outer pipe enclosing the inner pipe to define a space between the inner pipe and the outer pipe, and a connector communicating with the space for evacuating the space to provide thermal insulation for the inner pipe, characterised in that the duct section is arranged as a unit for assembly with other duct sections, the opposite end regions of the inner pipe either side of the bellows being secured to the outer pipe at respective end regions of the outer pipe.

The inner pipe may comprise first and second inner pipe portions joined end-to-end, in which case the first inner pipe portion may include the bellows. The first inner pipe portion may be shorter than the second inner pipe portion, and for example the shorter inner pipe portion may include the bellows and be not longer than 20% of the length of the longer inner pipe portion.

The outer pipe may comprise first and second outer pipe portions which are joined together end to end. The first inner pipe portion may extend within the first outer pipe portion, the first outer pipe portion being provided with the connector. The first inner pipe portion, including the bellows, and the first outer pipe portion may comprise a modular unit to which may be attached second inner and outer pipe portions of a length selected to provide the desired length of the finished duct section.

According to a second aspect of the present invention, there is provided a method of manufacturing a duct section in accordance with the first aspect of the invention, the inner pipe of the duct section comprising first and second inner pipe portions joined end-to-end, the first inner pipe portion including the bellows, and the outer pipe comprising first and second outer pipe portions which are joined end-to-end, which method comprises:
assembling the first inner pipe portion with the first outer pipe portion;
securing one end of the first outer pipe portion to the first inner pipe portion with the first inner pipe portion extending past the other end of the outer pipe portion;
securing the second inner pipe portion to the first inner pipe portion;
securing the second outer pipe portion to the first outer pipe portion; and
securing the end of the second outer pipe portion away from the first outer pipe portion to the second inner pipe portion, characterised in that the bellows is extended to an expanded condition before the end of the second outer pipe portion away from the first outer pipe portion is secured to the second inner pipe portion.

The inner pipe may be supported within the outer pipe by a supporting element which contacts the outer pipe at angularly spaced locations, the supporting element comprising a carrier portion which is disposed within the space and extends around the inner pipe, the carrier portion being provided with radially extending arms which engage at least one of the inner and outer pipes.

According to a third aspect of the present invention, there is provided a duct section comprising an inner pipe for conveying steam generated by a steam plant, an outer pipe enclosing the inner pipe to define a space between the inner pipe and the outer pipe, and a connector communicating with the space for evacuating the space to provide thermal insulation for the inner pipe, the inner pipe being supported within the outer pipe by a supporting element which contacts the outer pipe at angularly spaced locations, the supporting element comprising a carrier portion which is disposed within the space and extends around the inner pipe, the carrier portion being provided with radially extending arms which engage at least one of the inner and outer pipes.

The supporting element may be formed from thin sheet material, which may be metallic.

The carrier portion may extend transversely of the lengthwise direction of the inner and outer pipes. The arms may be provided with tabs extending in the lengthwise direction of the inner and outer pipes, each tab lying against the outer surface of the inner pipe or the inner surface of the outer pipe, respectively. The arms may comprise radially inwardly extending arms which engage the inner pipe and radially outwardly extending arms which engage the outer pipe.

The inner tabs may be fixed to inner pipe, for example by welding. The outer tabs may be in slidable contact with the outer pipe, and may be resiliently biased into contact with the outer pipe.

The carrier may extend only partially around the inner pipe.

A cylindrical radiation shield may be disposed in the space between the inner and outer pipes, and may be supported by the supporting element. For this purpose, the supporting element may have intermediate radially extending arms which engage the radiation shield. The intermediate radially extending arms may be provided with intermediate tabs which extend in the lengthwise direction of the inner and outer pipes, each intermediate tab lying against a surface of the radiation shield.

Respective sections of the radiation shield may be provided around the first and second inner pipe portions, supported by respective supporting elements.

According to a fourth aspect of the present invention, there is provided a duct comprising first and second duct sections, each duct section comprising an inner pipe for conveying fluid, an outer pipe enclosing the inner pipe to define a space between the inner pipe and the outer pipe, and a connector communicating with the space for evacuating the space to provide thermal insulation for the inner pipe, the inner pipes of the pipe sections being interconnected end-to-end at end regions of the inner pipes which project beyond the respective ends of the outer pipes whereby the outer pipes of the pipe sections are spaced apart at the interconnection between the inner pipes, the projecting end regions of the inner pipes being enclosed by a housing which comprises two housing parts which are hinged together, securing means engaging the housing parts to retain them with respect to each other in an enclosing configuration.

A cavity may be defined between the housing and the end regions of the inner pipes, and the cavity may accommodate insulation material.

Flanges may be provided on the housing parts, the flanges being in face to face contact in the enclosing configuration. The securing means may engage the flanges.

The housing parts may be interconnected by an integral hinge. The housing parts may be mirror images of each other about the axis of the hinge.

The present invention also provides a housing for enclosing projecting end regions of interconnected inner duct sections of a duct in accordance with the fourth aspect of the present invention.

Furthermore, the present invention also provides a steam line comprising a duct or duct section in accordance with any one of the first, third and fourth aspects of the invention.

### Detailed Description

For a better understanding of the present invention and to show how it may be carried into effect, reference will now be made, by way of example, to the accompanying drawings, in which:
Figure 1 is a side view of a duct section;
Figure 2 corresponds to Figure 1, but shows the duct section with a part omitted;
Figure 3 is a sectional side view of the duct section shown in Figure 1;
Figure 4 is an enlarged view of an end module shown in Figure 3;
Figure 5 is an enlarged view of an intermediate section of Figure 3;
Figure 6 is a developed view of a supporting element of the duct section of Figures 1 to 3;
Figure 7 is an end view of the supporting element;
Figure 8 is a perspective view of the supporting element;
Figure 9 is a side view of the supporting element;
Figure 10 shows a radiation shield of the duct section of Figures 1 to 3;
Figure 11 shows a bellows of the duct section of Figures 1 to 3;
Figure 12 shows three interconnected duct sections provided with an insulating housing shown in a partially assembled condition;
Figure 13 shows a further stage in the assembly of the housing; and
Figure 14 shows the housing in the final assembled condition.

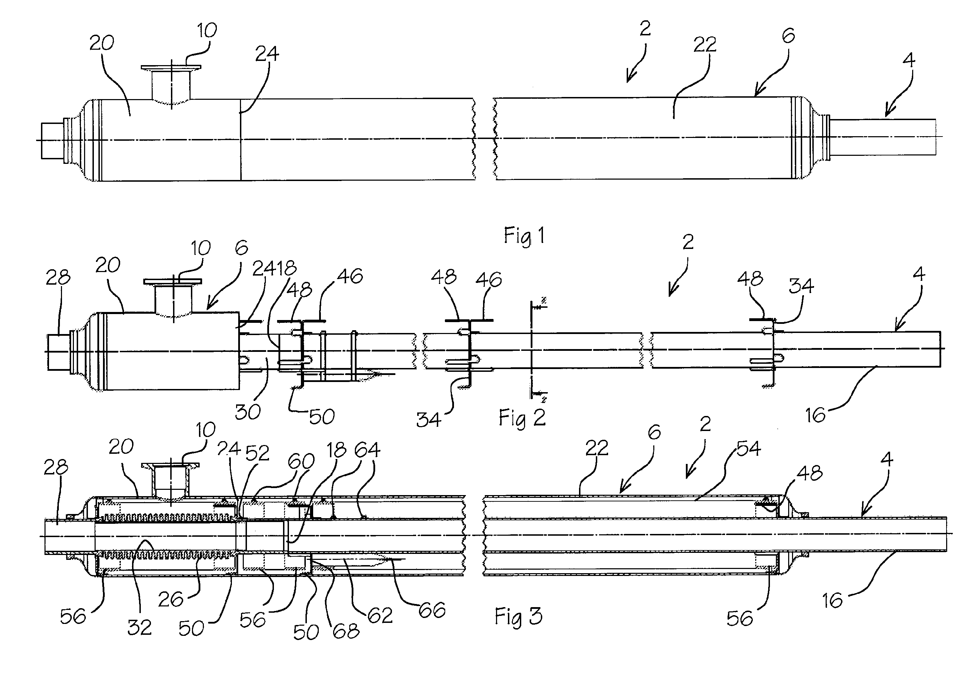

The duct section 2 shown in Figures 1 to 3 is suitable for use as a component of a duct for conveying steam within an industrial plant, and more specifically within a cleanroom environment. The duct may be supplied as a unit for assembly with other duct sections, and appropriate fittings and ancillary components, to enable a ducting system to be constructed to meet the requirements of a particular user. Duct sections as shown in Figures 1 to 3 may be supplied in various lengths, of up to, and possibly exceeding, four metres.

The duct section 2 comprises an inner pipe 4 and an outer pipe 6. A space 8 is defined between the inner and outer pipes 4, 6, and this space can be evacuated through a connector 10, by means of a vacuum pump (not shown). At its ends, the outer pipe 6 is sealingly connected to the inner pipe 4 by means of end caps 12 which are secured in a leak-tight manner to the outer pipe 6 and to the inner pipe 4, for example by welding.

The inner pipe 4 comprises first and second inner pipe portions 14, 16 which are welded together at a joint 18. Similarly, the outer pipe 6 comprises first and second outer pipe portions 20, 22 which are welded together at a joint 24.

The first inner pipe portion 14 incorporates a bellows 26 which is welded at each end to terminal portions 28, 30 of the first inner pipe portion 14. An anti-squirm device in the form of a reinforcing sleeve 32 is secured, for example by welding, to the terminal portion 30 and extends within the bellows 26 to serve as a reinforcing and supporting element. The anti-squirm device 32 thus maintains the alignment of the bellows 26 as the bellows 26 expands and contracts while under internal pressure.

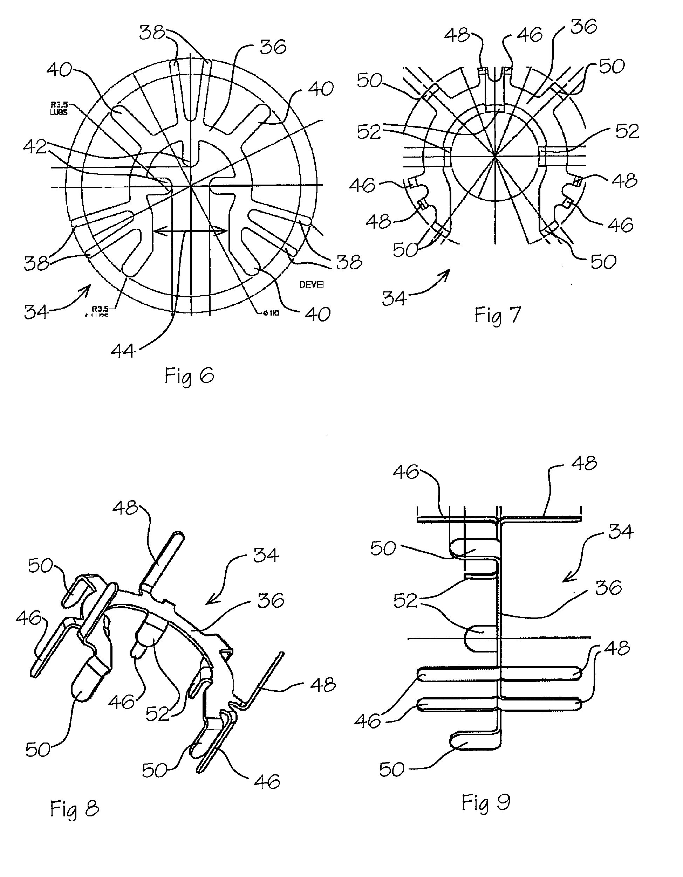

The inner pipe 4 is supported within the outer pipe 6 by supporting elements 34 which are distributed along the length of the inner pipe 4. Each supporting element is shown more clearly in Figures 6 to 9, and comprises a carrier portion 36 from which arms 38, 40, 42 extend. The supporting element 34 is formed from thin sheet material, such as stainless steel, having a thickness which, for example, may be less than 2mm and, in a specific example, may be 1 mm.

Figure 6 shows the supporting element 34 in a developed form, i.e. as cut from a sheet of stainless steel. Figures 7 to 9 show the supporting element 34 in the condition as fitted to the duct section 2.

It will be appreciated from Figure 6 that the arms 38, 40, 42 are distributed about the carrier portion 36 in three radially extending groups, namely a first outwardly extending group 38, a second outwardly extending group 40, and an inwardly extending group 42. The first outwardly extending group 38 comprises six arms grouped in pairs, with the pairs spaced apart from each other by 120° around the carrier portion 36. The arms 38 of each pair are inclined to each other at 16° about the central axis of the carrier portion 36. The arms 40 constitute outer pipe engaging arms and are spaced apart from each other at approximately 90° degree intervals about the carrier portion 36. The arms 42 constitute a group of three inner pipe engaging arms, two of which are diametrically opposite each other, with the third positioned halfway between them. It will be appreciated from Figure 6 that the carrier portion 36 extends around an arc somewhat greater than 180°, so as to leave an opening 44 which can accommodate the inner pipe 4.

For installation during assembly of the duct section 2, the arms 38, 40, 42 are bent at approximately 90 degrees from the developed form shown in Figure 6, as shown in Figures 8 and 9. Thus, the first outwardly extending arms 38 of each pair are bent in opposite directions from each other so as to form oppositely directed intermediate tabs 46, 48 which lie in the lengthwise direction of the duct section 2, as shown in Figure 2. The second outwardly extending arms 40 are all bent in one direction to form outer tabs 50, and the radially inwardly extending arms 42 are all bent in the same direction, corresponding to the direction in which the tabs 50 extend, to form inner tabs 52.

As can be appreciated from Figures 2 and 3, each supporting element 34 is installed so that the inner tabs 52 lie on the outer surface of the inner pipe 4, and the outer tabs 50 lie against the inner surface of the outer pipe 6. The inner tabs 52 are welded to the inner pipe 4, while the outer tabs 50 are slidable on the inner surface of the outer pipe 6. The outer tabs 50 may be biased under their own resilience towards the inner surface of the outer pipe 6 to provide stable contact with the outer pipe 6.

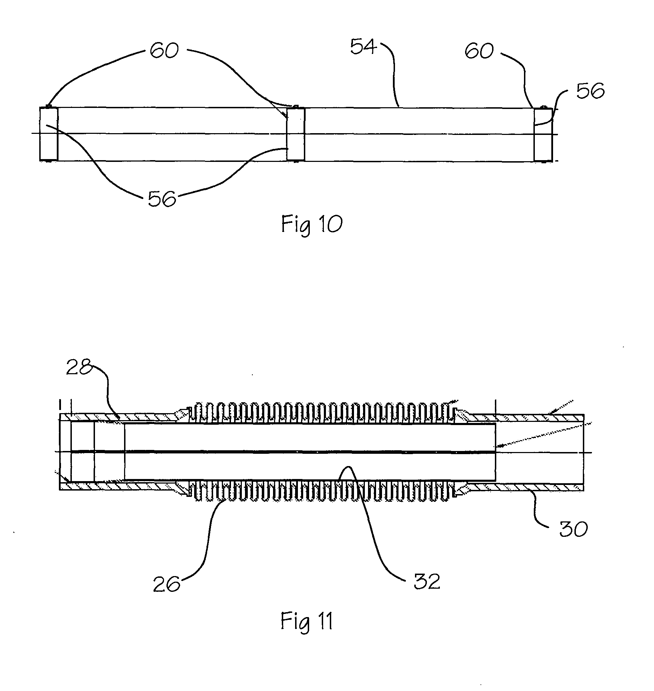

As shown in Figure 3, the intermediate tabs 46, 48 serve to support sections 54, 72 of a radiation shield comprising a cylindrical tube of thin reflective material. A section of the radiation shield is shown in Figure 10. Each radiation shield section 54 is made from a tube 55 of tempered aluminium sheet having a thickness less than 0.1 mm. Each tube 55 has an internal ring support 56 at each end, and may have one or more additional ring supports 56 at intermediate positions along its length. The tube 55 is clamped onto the ring supports by means of suitable straps or clips 60, which may be in the form of cable ties.

The ring supports 56 are slidable on the intermediate tabs 46, 48 to allow for differential expansion between the inner pipe 4 and the radiation shield sections 54.

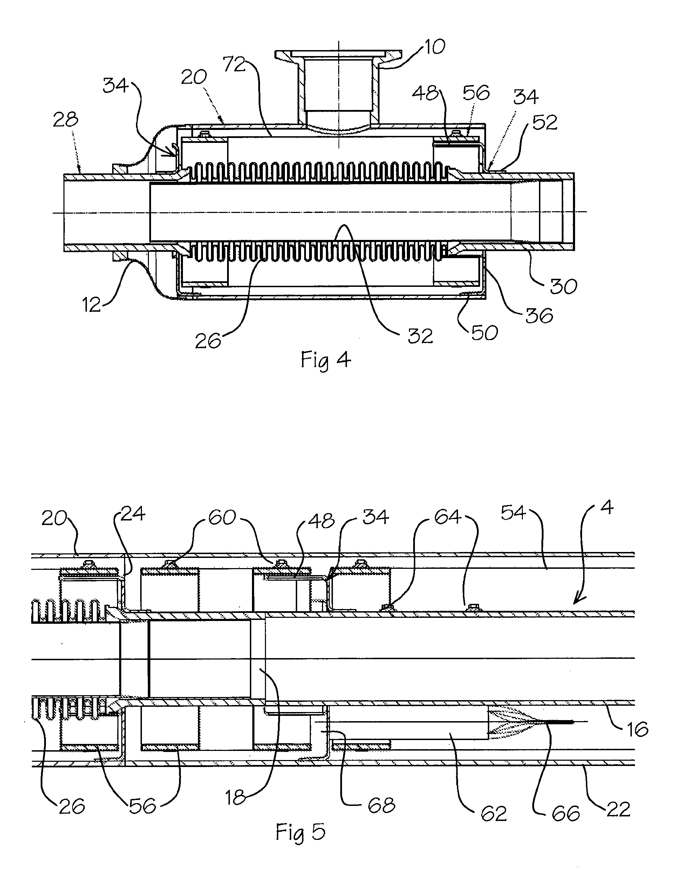

As shown in Figures 3 and 5, a getter 62 is mounted on the inner pipe 4 by means of straps 64. Each getter 62 comprises an enclosure in the form of a metal tube containing a getter material, for example barium. Each tube comprises a welded closed end 66 and an open end 68 which defines a port providing communication between the interior of the enclosure and the space 70 defined between the inner and outer pipes 4, 6. Before commissioning of the duct section 2, the port 68 is closed by a fusible closure in the form of a cap seal (not shown), for example an indium cap seal.

The duct section shown in Figures 1 to 5 is assembled in the following manner. The arms 38, 40, 42 of the supporting element 34 are bent from the configuration in Figure 5 to that shown in Figure 6 to 8, to form the tabs 46, 48, 50, 52.

The module comprising the first portion 14 of the inner pipe 4 and the first portion 20 of the outer pipe 6 is assembled by welding the end cap 12 onto the first portion 20 of the outer pipe 6, and then welding the end cap 12 to the terminal portion 28 of the first portion 14 of the inner pipe 4. The section 72 of the radiation shield situated within the first portion 20 of the outer pipe 6 is then installed. It will be appreciated from Figures 2 and 4 that the terminal portion 30 of the first inner pipe portion 14 projects from the first portion 20 of the outer pipe 6 at the end opposite the end cap 12. The resulting fully assembled module is shown in Figure 4.

The second portion 16 of the inner pipe 4 is then welded to the terminal portion 30 to form the joint 18. The supporting elements 34 are then successively fitted at the appropriate locations on the second portion 16 of the inner pipe 4, and welded in place using the tabs 52. As the supporting elements 34 are installed, the radiation shield sections 54 are also fitted over the tabs 46, 48. The second portion 22 of the outer pipe 6 is then fitted over the inner pipe 4, sliding the second portion 22 over the tabs 50 of the supporting elements 34. When in place, the second portion 22 of the outer pipe 6 is secured to the first portion 20 by welding to form the joint 24. Subsequently, the second portion 16 of the inner pipe 4 is withdrawn from the second portion 22 of the outer pipe 6 to extend the bellows 26. The terminal cap 12 of the second portion 22 of the outer pipe 6 is then welded to the second portion 16 of the inner pipe 4, and the projecting region of the inner pipe 4 is cut to length.

It will be appreciated that the same module shown in Figure 4 can be used to produce duct sections 2 of different lengths by selecting the length of the second portions 16, 22 of the inner and outer pipes 4, 6 appropriately.

One example of a process for commissioning the duct section 2 for use comprises using a vacuum pump (not shown) connected to the connector 10 to pump gas from the space 8 while the duct section 2 is heated to an elevated temperature, for example, 140 degrees Celsius to drive outgassing of the internal surfaces of the duct section 2. The outer pipe 6 may be heated by any suitable means, for example heater tape, and the inner pipe 4 may be heated by passing steam (or hot air) through it at a suitable pressure, say 2.5 bar. This outgassing step continues until the pressure in the space 8 is a pre-determined value, for example 10⁻⁶ mbar. It is important during this outgassing step that the temperature is never high enough to activate the getters 62.

Next, the getters 62 are activated by passing steam (or hot air) through the inner pipe 4, the steam having a high enough temperature to heat the inner pipe 4 and the getters 62 to a temperature sufficient to fuse the thermally sensitive end caps. For example, if the end caps were indium, which has a melting point of about 157 degrees Celsius, passing steam through the inner pipe 4 at a pressure of about 14.5 bar and a temperature of about 198 degrees Celsius for around 30 minutes would cause sufficient heating to remove the indium and activate the getters 62. The vacuum pump (not shown) is kept pumping the space 8 until the pressure, which rises as the indium is removed from the getters 62, is reduced back to 10⁻⁶ mbar. Thereafter, the connector 10 is closed to seal the vacuum, the vacuum pump is disconnected and the duct section 1 is ready for operational use.

Duct sections as shown in Figure 1, and possibly of various lengths, can be interconnected to provide a steam line, for example in a cleanroom environment. Pipeline ancillaries such as valves, steam traps, etc may be connected to the duct sections.

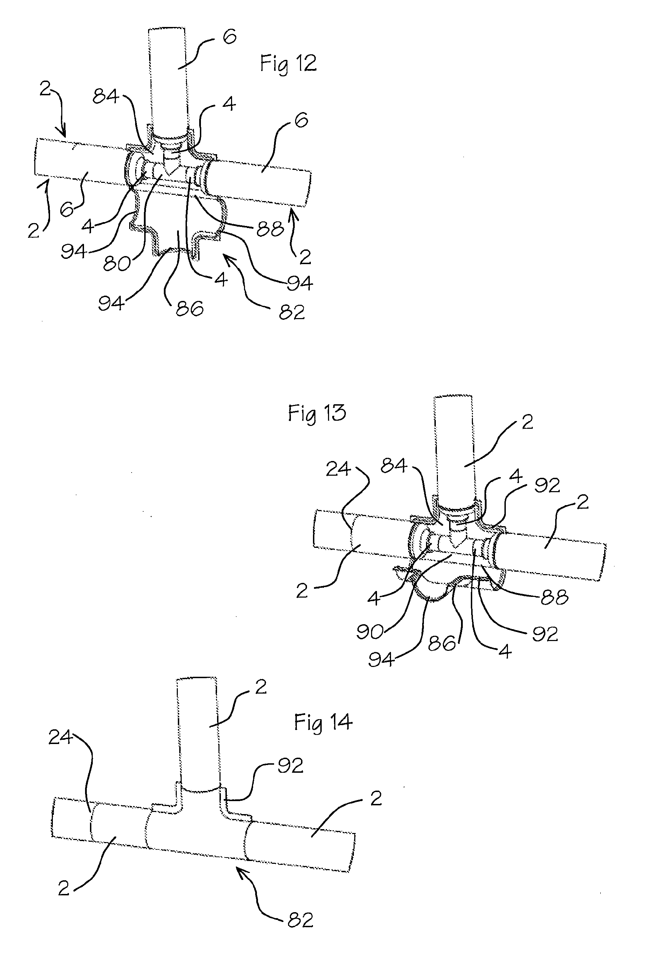

Figures 12 to 14 show a three-way connection between duct sections 2, the connection being established by a T-connector 80. The branches of the T-connector 80 are joined to the inner pipes 4 of each duct section 2, for example by welding.

It will be appreciated that, because the T-connector 80 and the projecting portions of the inner pipes 4 extend outside the outer pipes 6, they are not insulated by the vacuum in the spaces 8 of the duct sections 2, and substantial heat loss can occur at the connection between the duct sections 2 if additional measures are not taken. To avoid such heat loss, a housing 82 is fitted over the exposed sections, and the cavity 84 created between the housing on the one hand, and the exposed portions of the inner pipes 4 and the connector 80 on the other hand, is filled with an insulating material such as glass fibre insulation.

The housing 82 may be made from any suitable material, such as a plastics or metallic material. It comprises two housing parts 84, 86 which are hinged together about a hinge 88 which may in fact comprise two closely spaced parallel hinge lines. Each hinge line may be constituted as an integral hinge, i.e. a hinge line formed by a crease, groove or other line of weakening in the material of the housing which preferably does not penetrate entirely through the material.

As shown in Figure 12, the housing is in an open configuration with one housing part 84 fitted to the three duct sections 2. To complete the installation of the housing the other housing part 86 is swung upwardly about the hinge 88, as shown in Figure 13, to an enclosing configuration as shown in Figure 14. Insulation material (not shown) can be introduced into the cavity 90 formed between the housing 82 before it is completely closed. For example, the insulation material could take the form of windings of the material over the connector 80 and the projecting portions of the inner pipe 4.

The housing parts 84, 86 are secured in the enclosing configuration in any suitable way. For example, as shown in Figures 12 to 14, the housing parts 84, 86 may have flanges 92 at their edges that contact each other. These flanges 92 may be secured together by welding or bonding, or by means of clamps which clamp the flanges 92 together.

Seals 94 are provided on the housing parts 84, 86 to seal against the outer pipes 6 when the housing parts are in the enclosing configuration.

In use, the vacuum in the space 8 of each duct section 2 and the insulating effect of the housings 82, along with any insulating material within them, substantially reduce heat transfer from steam or other hot fluid in the inner pipe 4, to the exterior. Since the bellows is expanded during assembly of the duct section, at ambient temperature, thermal expansion of the inner pipe 4 when hot fluid flows within it will be accommodated by compression of the bellows 26. The anti-squirm device 32 maintains alignment of the bellows as it expands and contracts.

Although the embodiments shown in the drawings show a bellows 26 to accommodate differential expansion between the inner and outer pipes 4, 6, it will be appreciated that other expandable structures could be employed, such as telescopic structures.

Furthermore, it will be appreciated that the duct section 2 described herein is also suitable for conveying cold fluids, such as cryogenic fluids, with suitable alteration to reflect the fact that the conveyed fluid will be at a temperature below ambient.

## Claims

1. A duct section comprising:
an inner pipe (4) for conveying a fluid, wherein the inner pipe (4) includes a bellows (26);
an outer pipe (6) enclosing the inner pipe (4) to define a space (8) between the inner pipe (4) and the outer pipe (6); and
a connector (10) communicating with the space (8) for evacuating the space (8) to provide thermal insulation for the inner pipe (4), **characterised in that**
the duct section (2) is arranged as a unit for assembly with other duct sections (2), the opposite end regions of the inner pipe (4) either side of the bellows (26) being secured to the outer pipe (6) at respective end regions of the outer pipe (6).

2. A duct section as claimed in claim 1, **characterised in that** the inner pipe (4) comprises first and second inner pipe portions (14, 16) joined end-to-end, the first inner pipe portion (14) including the bellows (26).

3. A duct section as claimed in claim 2, **characterised in that** the first inner pipe portion (14) is shorter than the second inner pipe portion (16).

4. A duct section as claimed in claim 3, **characterised in that** the shorter inner pipe portion (14) includes the bellows (26) and is not longer than 20% of the length of the longer inner pipe portion (16).

5. A duct section as claimed in any one of the preceding claims, **characterised in that** the outer pipe (6) comprises first and second outer pipe portions (20, 22) which are joined together end to end.

6. A duct section as claimed in claim 5, **characterised in that** the first inner pipe portion (14) extends within the first outer pipe portion (20), the first outer pipe portion (20) being provided with the connector (10).

7. A method of manufacturing a duct section (2) as claimed in claim 5 when appendant to claim 2, which method comprises:
assembling the first inner pipe portion (14) with the first outer pipe portion (20);
securing one end of the first outer pipe portion (20) to the first inner pipe portion (14) with the first inner pipe portion (14) extending past the other end of the first outer pipe portion (20);
securing the second inner pipe portion (16) to the first inner pipe portion (14);
securing the second outer pipe portion (22) to the first outer pipe portion (20); and
securing the end of the second outer pipe portion (22) away from the first outer pipe portion (20) to the second inner pipe portion (16), **characterised in that**
the bellows (26) is extended to an expanded condition before the end of the second outer pipe portion (22) away from the first outer pipe portion (20) is secured to the second inner pipe portion (16).

8. A duct section as claimed in any one of claims 1 to 6, **characterised in that** the inner pipe (4) is supported within the outer pipe (6) by a supporting element (34) which contacts the outer pipe (6) at angularly spaced locations, the supporting element (34) comprising a carrier portion (36) which is disposed within the space (8) and extends around the inner pipe (4), the carrier portion (36) being provided with radially extending arms (40, 42) which engage at least one of the inner and outer pipes.

9. A duct section as claimed in claim 8, **characterised in that** the arms (40, 42) are provided with inner and outer tabs (50, 52) extending in the lengthwise direction of the inner and outer pipes, each tab (50, 52) lying against the outer surface of the inner pipe (4) or the inner surface of the outer pipe (6), respectively.

10. A duct section as claimed in claim 9, **characterised in that** the inner tabs (52) are fixed to the inner pipe (4).

11. A duct section as claimed in claim 10, **characterised in that** the outer tabs (50) are in slidable contact with the outer pipe (6).

12. A duct section as claimed in claim 11, **characterised in that** the outer tabs (50) are resiliently biased into contact with the outer pipe (6).

13. A duct section as claimed in any one of claims 8 to 12, **characterised in that** a cylindrical radiation shield (54) is disposed in the space (8) between the inner and outer pipes, and is supported by the supporting element (34).

14. A duct section as claimed in claim 13 when appendant to claim 4, **characterised in that** the supporting element (34) is provided on the second inner pipe portion (16) and supports a section of the radiation shield (54) extending around the second inner pipe portion (16).

15. A steam line comprising a duct or duct section (2) in accordance with any one of claims 1 to 6 or 8 to 14.

## Patentansprüche

1. Kanalabschnitt, umfassend:
ein Innenrohr (4) zum Befördern eines Fluids, wobei das Innenrohr (4) einen Faltenbalg (26) aufweist;
ein Außenrohr (6), das das Innenrohr (4) umgibt und einen Raum (8) zwischen Innenrohr (4) und Außenrohr (6) definiert; und
ein mit dem Raum (8) kommunizierendes Verbindungsstück (10), das den Raum (8) evakuiert und so eine thermische Isolierung für das Innenrohr schafft (4), **dadurch gekennzeichnet, dass**
der Rohrabschnitt (2) als Einheit für den Zusammenbau mit anderen Kanalabschnitten (2) angeordnet ist, wobei die gegenüberliegenden Endregionen des Innenrohrs (4) beiderseits des Faltenbalgs (26) am Außenrohr (6) an entsprechenden Endregionen des Außenrohrs (6) befestigt sind.

2. Kanalabschnitt nach Anspruch 1, **dadurch gekennzeichnet, dass** das Innenrohr (4) erste und zweite Innenrohrteile (14, 16) umfasst, die Ende an Ende verbunden sind, wobei der erste Innenrohrteil (14) den Faltenbalg (26) umfasst.

3. Kanalabschnitt nach Anspruch 2, **dadurch gekennzeichnet, dass** der erste Innenrohrteil (14) kürzer ist als der zweite Innenrohrteil (16).

4. Kanalabschnitt nach Anspruch 3, **dadurch gekennzeichnet, dass** der kürzere Innenrohrteil (14) den Faltenbalg (26) umfasst, und nicht länger ist als 20% der Länge des längeren Innenrohrteils (16).

5. Kanalabschnitt nach einem der vorhergehenden Ansprüche, **dadurch gekennzeichnet, dass** das Außenrohr (6) erste und zweite Außenrohrteile (20, 22) umfasst, die Ende an Ende miteinander verbunden sind.

6. Kanalabschnitt nach Anspruch 5, **dadurch gekennzeichnet, dass** der erste Innenrohrteil (14) im ersten Außenrohrteil (20) verläuft, wobei der erste Außenrohrteil (20) das Verbindungsstück (10) aufweist.

7. Verfahren zur Herstellung eines Kanalabschnitts (2) nach Anspruch 5, wenn anhängig an Anspruch 2, wobei das Verfahren umfasst:
Zusammenbau des ersten Innenrohrteils (14) mit dem ersten Außenrohrteil (20);
Befestigen eines Endes des ersten Außenrohrteils (20) am ersten Innenrohrteil (14), wobei der erste Innenrohrteil (14) hinter das andere Ende des ersten Außenrohrteils (20) verläuft;
Befestigen des zweiten Innenrohrteils (16) am ersten Innenrohrteil (14);
Befestigen des zweiten Außenrohrteils (22) am ersten Außenrohrteil (20); und
Befestigen des Endes des zweiten Außenrohrteils (22) weg vom ersten Außenrohrteil (20) am zweiten Innenrohrteil (16), **dadurch gekennzeichnet, dass**
der Faltenbalg (26) zu einem erweiterten Zustand ausläuft, bevor das Ende des zweiten Außenrohrteils (22) weg vom ersten Außenrohrteil (20) am zweiten Innenrohrteil (16) befestigt wird.

8. Kanalabschnitt nach einem der Ansprüche 1 bis 6, **dadurch gekennzeichnet, dass** das Innenrohr (4) im Außenrohr (6) durch ein Haltebauteil (34) unterstützt wird, das das Außenrohr (6) an winkelig beabstandeten Stellen kontaktiert, wobei das Haltebauteil (34) einen Trägerteil (36) umfasst, der sich im Raum (8) befindet und um das Innenrohr (4) verläuft, wobei der Trägerteil (36) radial verlaufende Arme (40, 42) aufweist, die mindestens eines der Innen- und Außenrohre greifen.

9. Kanalabschnitt nach Anspruch 8, **dadurch gekennzeichnet, dass** die Arme (40, 42) Innen- und Außenlaschen (50, 52) aufweist, die in Längsrichtung der Innen- und Außenrohre verlaufen, wobei jede Lasche (50, 52) an der Außenseite des Innenrohrs (4) bzw. der Innenseite des Außenrohrs (6) anliegt.

10. Kanalabschnitt nach Anspruch 9, **dadurch gekennzeichnet, dass** die Innenlaschen (52) am Innenrohr (4) befestigt sind.

11. Kanalabschnitt nach Anspruch 10, **dadurch gekennzeichnet, dass** die Außenlaschen (50) in Gleitkontakt mit dem Außenrohr (6) sind.

12. Kanalabschnitt nach Anspruch 11, **dadurch gekennzeichnet, dass** die Außenlaschen (50) elastisch in Kontakt mit dem Außenrohr (6) gespannt sind.

13. Kanalabschnitt nach einem der Ansprüche 8 bis 12, **dadurch gekennzeichnet, dass** ein zylindrischer Strahlungsschirm (54) in dem Raum (8) zwischen den Innen- und Außenrohren angeordnet ist, und durch das Haltebauteil (34) gestützt wird.

14. Kanalabschnitt nach Anspruch 13, wenn anhängig an Anspruch 4, **dadurch gekennzeichnet, dass** sich das Haltebauteil (34) auf dem zweiten Innenrohrteil (16) befindet, und einen Abschnitt des Strahlungsschirms (54) unterstützt, der um den zweiten Innenrohrteil (16) verläuft.

15. Dampfleitung, umfassend einen Kanal oder Kanalabschnitt (2) nach einem der Ansprüche 1 bis 6 oder 8 bis 14.

## Revendications

1. Section de conduit comprenant :
un tuyau interne (4) pour transporter un fluide, dans laquelle le tuyau interne (4) comprend un soufflet (26) ;
un tuyau externe (6) entourant le tuyau interne (4) afin de définir un espace (8) entre le tuyau interne (4) et le tuyau externe (6) ; et
un connecteur (10) communiquant avec l'espace (8) pour évacuer l'espace (8) afin de fournir l'isolation thermique au tuyau interne (4), **caractérisée en ce que** :
la section de conduit (2) est agencée comme une unité pour s'assembler avec d'autres sections de conduit (2), les régions d'extrémité opposées du tuyau interne (4) de chaque côté du soufflet (26) étant fixées au tuyau externe (6) au niveau de régions d'extrémité respectives du tuyau externe (6).

2. Section de conduit selon la revendication 1, **caractérisée en ce que** le tuyau interne (4) comprend des première et seconde parties de tuyau interne (14, 16) assemblées bout à bout, la première partie de tuyau interne (14) comprenant le soufflet (26).

3. Section de conduit selon la revendication 2, **caractérisée en ce que** la première partie de tuyau interne (14) est plus courte que la seconde partie de tuyau interne (16).

4. Section de conduit selon la revendication 3, **caractérisée en ce que** la partie de tuyau interne plus courte (14) comprend le soufflet (26) et ne représente pas plus de 20% de la longueur de la partie de tuyau interne plus longue (16).

5. Section de conduit selon l'une quelconque des revendications précédentes, **caractérisée en ce que** le tuyau externe (6) comprend des première et seconde parties de tuyau externe (20, 22) qui sont assemblées bout à bout.

6. Section de conduit selon la revendication 5, **caractérisée en ce que** la première partie de tuyau interne (14) s'étend à l'intérieur de la première partie de tuyau externe (20), la première partie de tuyau externe (20) étant prévue avec le connecteur (10).

7. Procédé pour fabriquer une section de conduit (2) selon la revendication 5 lorsqu'elle dépend de la revendication 2, lequel procédé comprend les étapes consistant à :
assembler la première partie de tuyau interne (14) avec le première partie de tuyau externe (20) ;
fixer une extrémité de la première partie de tuyau externe (20) à la première partie de tuyau interne (14) avec la première partie de tuyau interne (14) qui s'étend au-delà de l'autre extrémité de la première partie de tuyau externe (20) ;
fixer la seconde partie de tuyau interne (16) à la première partie de tuyau interne (14) ;
fixer la seconde partie de tuyau externe (22) à la première partie de tuyau externe (20) ; et
fixer l'extrémité de la seconde partie de tuyau externe (22) à distance de la première partie de tuyau externe (20), à la seconde partie de tuyau interne (16), **caractérisé en ce que** :
le soufflet (26) est étendu dans une condition expansée avant que l'extrémité de la seconde partie de tuyau externe (22) à distance de la première partie de tuyau externe (20), ne soit fixée à la seconde partie de tuyau interne (16).

8. Section de conduit selon l'une quelconque des revendications 1 à 6, **caractérisée en ce que** le tuyau interne (4) est supporté à l'intérieur du tuyau externe (6) par un élément de support (34) qui est en contact avec le tuyau externe (6) à des emplacements angulairement espacés, l'élément de support (34) comprenant une partie porteuse (36) qui est disposée à l'intérieur de l'espace (8) et s'étend autour du tuyau interne (4), la partie porteuse (36) étant prévue avec des bras (40, 42) s'étendant de manière radiale, qui mettent en prise au moins l'un des tuyaux interne et externe.

9. Section de conduit selon la revendication 8, **caractérisée en ce que** les bras (40, 42) sont prévus avec des languettes internes et externes (50, 52) s'étendant dans le sens de la longueur des tuyaux interne et externe, chaque languette (50, 52) se trouvant contre la surface externe du tuyau interne (4) ou la surface interne du tuyau externe (6), respectivement.

10. Section de conduit selon la revendication 9, **caractérisée en ce que** les languettes internes (52) sont fixées au tuyau interne (4).

11. Section de conduit selon la revendication 10, **caractérisée en ce que** les languettes externes (50) sont en contact coulissant avec le tuyau externe (6).

12. Section de conduit selon la revendication 11, **caractérisée en ce que** les languettes externes (50) sont élastiquement sollicitées en contact avec le tuyau externe (6).

13. Section de conduit selon l'une quelconque des revendications 8 à 12, **caractérisée en ce qu'**un écran de protection contre le rayonnement cylindrique (54) est disposée dans l'espace (8) entre les tuyaux interne et externe, et est supportée par l'élément de support (34).

14. Section de conduit selon la revendication 13 lorsque dépend de la revendication 4, **caractérisée en ce que** l'élément de support (34) est prévu sur la seconde partie de tuyau interne (16) et supporte une section de l'écran de protection contre le rayonnement (54) s'étendant autour de la seconde partie de tuyau interne (16).

15. Canalisation de vapeur comprenant un conduit ou une section de conduit (2) selon l'une quelconque des revendications 1 à 6 ou 8 à 14.
